# EUROPÄISCHE PATENTSCHRIFT

(11) **EP 1 122 215 B1**
(45) Veröffentlichungstag und Bekanntmachung des Hinweises auf die Patenterteilung: **08.02.2006**
(21) Anmeldenummer: 01102158.1
(22) Anmeldetag: 02.02.2001
(51) Int. Cl.: C02F 1/20, C02F 101/38, C02F 103/12

(54) **Verfahren zum Recycling hydroxylaminhaltiger Stripperlösungen**
Process for recycling stripping solutions containing hydroxylamins
Procédé de recyclage des liquides de strippage contenant des hydroxylamines

(30) Priorität: 04.02.2000 DE 10004818
(43) Veröffentlichungstag der Anmeldung: 08.08.2001
(73) Patentinhaber: BASF Aktiengesellschaft, 67056 Ludwigshafen (DE)
(72) Erfinder: Watzenberger, Otto, Dr., 68199 Mannheim (DE); Schelling, Heiner, 67281 Kirchheim (DE)
(74) Vertreter: Isenbruck, Günter

(56) Entgegenhaltungen:
- WO-A-97/22551
- DE-A- 19 725 851
- US-A- 5 837 107

## Beschreibung

Die Erfindung betrifft ein Verfahren zur Aufarbeitung hydroxylaminhaltiger Lösungen, insbesondere aus der Elektronikindustrie.

In der Elektronikindustrie werden zur Reinigung von Elektronikbauteilen, wie zum Beispiel Chips, wäßrige Lösungen von Hydroxylamin und Aminen verwendet. Diese Gemische enthalten ca. 10 bis 30 % Wasser, 5 bis 20 % Hydroxylamin und 50 bis 85 % Amine. Als Amin wird zum Beispiel N-Methylpyrrolidon verwendet. Die gebrauchten Lösungen sind nur schwach verunreinigt. Sie ließen sich bisher nicht wieder aufarbeiten und mußten entsorgt werden. Die in den gebrauchten Lösungen enthaltenen Amine sind bakterientoxisch. Eine Einleitung in eine Kläranlage und eine biologische Aufarbeitung ist daher nicht möglich. Eine Deponierung der gebrauchten Lösungen ist nur in Fässern möglich. Das in den Lösungen enthaltene Hydroxylamin und die verwendeten Amine sind gesundheitsschädliche Substanzen. Da diese Verbindungen auch korrosiv sind, müssen die Lagerstellen permanent überwacht werden, um auftretende Lecks rechtzeitig zu entdecken.

Eine chemische Zersetzung des Hydroxylamins und eine anschließende wäßrige Aufarbeitung der Amine ist zwar möglich. Dafür müssen jedoch entsprechende Chemikalien eingesetzt werden, welche Kosten verursachen. Außerdem verläuft die Zersetzungsreaktion langsam, da das Hydroxylamin durch die Amine stabilisiert wird. Es müssen daher lange Verweilzeiten in Kauf genommen werden, weshalb die Anlagen relativ groß dimensioniert werden müssen.

Eine destillative Aufarbeitung der Lösungen ist nicht möglich. Hydroxylamin ist eine thermisch labile Verbindung, die sich explosionsartig zersetzen kann. In den Lösungen wird sie durch Amine stabilisiert bzw. liegt in verdünnter Form vor. Bei einer Destillation wird das Wasser über Kopf abgezogen und die Amine verbleiben im Sumpf. Als Mittelsieder reichert sich das Hydroxylamin lokal in bestimmten Bereichen der Kolonne an und es werden Konzentrationen erreicht, bei denen das Hydroxylamin zur Zersetzung neigt, die unter Umständen spontan und explosionsartig erfolgen kann.

US 5,837,107 und DE 197 25 851 A1 beschreiben die Herstellung einer salzfreien wässrigen Hydroxylamin-Lösung durch Behandeln der salzhaltigen Lösung mit Wasser oder Wasserdampf in einer Stripkolonne.

Aufgabe der Erfindung ist es, ein Verfahren zur Aufarbeitung hydroxylaminhaltiger Lösungen, insbesondere aus der Elektronikindustrie, zur Verfügung zu stellen, das eine leichtere Entsorgung der Abfälle ermöglicht bzw. gegebenenfalls nach weiteren Reinigungsschritten die Rückführung der einzelnen Komponenten in den Produktionsprozess erlaubt.

Die Aufgabe wird bei dem erfindungsgemäßen Verfahren zur Aufarbeitung hydroxylaminhaltiger Lösungen, insbesondere aus der Elektronikindustrie enthaltend 10 bis 30% Wasser, 5 bis 20% Hydroxylamin und 50 bis 85% Amine, dadurch gelöst, daß die Lösung in eine Rektifikationskolonne eingeleitet wird und das Hydroxylamin im Gegenstrom mit Wasserdampf ausgetrieben wird, unter Erhalt eines Kopfprodukts aus wäßrigem Hydroxylamin und einer wässrigen Lösung der Amine als Sumpfprodukt.

Es wird eine weitgehend von Aminen befreite wäßrige Lösung von Hydroxylamin erhalten, in der das Hydroxylamin wegen der fehlenden Stabilisierungswirkung der Amine wesentlich einfacher zersetzt werden kann. Die verbleibende aminhaltige wäßrige Lösung kann destillativ aufgearbeitet werden, wobei die Amine in reiner Form zurückerhalten werden können.

Als Kopfprodukt wird eine wäßrige Hydroxylaminlösung erhalten, die einen Wassergehalt im Bereich von 80 bis 98 Gew.-% aufweist. Im Sumpf sammelt sich eine wäßrige Lösung der Amine mit einem Amingehalt von 40 bis 70 Gew.-%. Beide Ströme können weiter verarbeitet werden und durch weitere Aufreinigungen in verkaufsfähige Produkte umgewandelt werden. Als Rektifikationskolonne können alle gebräuchlichen Kolonnentypen verwendet werden. Beispiele sind gepackte Kolonnen, Glockenbodenkolonnen oder auch Kolonnen mit Einbauten.

Um den Amingehalt der über Kopf abgezogenen wäßrigen Hydroxylaminlösungen zu erniedrigen, ist nach einer speziellen Ausführungsform des erfindungsgemäßen Verfahrens vorgesehen, daß das Kopfprodukt kondensiert und teilweise in die Rektifikationskolonne zurückgeführt wird, wobei ein Rücklaufverhältnis von < 0,5 gewählt wird.

Bei einem Rücklaufverhältnis von > 0,5 wird das Hydroxylamin wieder in den Sumpf zurückgedrückt, seine Abtrennung wird daher verhindert. Bei einem zu geringen Rücklaufverhältnis besteht die Gefahr, daß Amine aus der Vorlage geschleppt werden und das gewonnene Hydroxylamin verunreinigen.

Die Rektifikationskolonne wird unter Normaldruck bis zu einem Unterdruck von 0,1 Atmosphären betrieben. Als geeignet hat sich herausgestellt, die Rektifikationskolonne bei einem Druck von 0,2 bis 0,7 Atmosphären zu betreiben. Bevorzugt beträgt der Druck 0,8 bis 1,0 Atmosphären.

Als Sumpfprodukt fällt eine wässrige Aminfraktion an, die weiter aufgearbeitet werden muß. Die Menge an Sumpfprodukt lässt sich vorteilhaft dadurch verringern, daß zumindest ein Teil des Sumpfprodukts erneut verdampft wird und die vorzugsweise dampfförmigen Anteile in die Rektifikationskolonne zurückgeführt werden. Dadurch kann die in den Sumpf der Rektifikationskolonne zugegebene Wassermenge stark verringert werden.

Ferner muß bei einer solchen Ausführungsform des erfindungsgemäßen Verfahrens das Wasser nicht notwendiger Weise als Dampf zugeführt werden. Das Wasser kann, zumindest teilweise, in flüssiger Phase der Rektifikationskolonne zugeführt werden, vorzugsweise in den Sumpf der Rektifikationskolonne eingeleitet werden.

Auf diese Weise kann als Sumpf eine wässrige Lösung mit einem Amingehalt von ca. 70 bis 98 Gew.-% erhalten werden.

Das erfindungsgemäße Verfahren wird anhand einer Zeichnung näher erläutert. Dabei zeigt:
- Figur 1:: eine erste Ausführungsform einer Vorrichtung zur Durchführung des erfindungsgemäßen Verfahrens;
- Figur 2:: eine zweite Ausführungsform einer Vorrichtung zur Druchführung des erfindungsgemäßen Verfahrens.

### Beispiel 1:

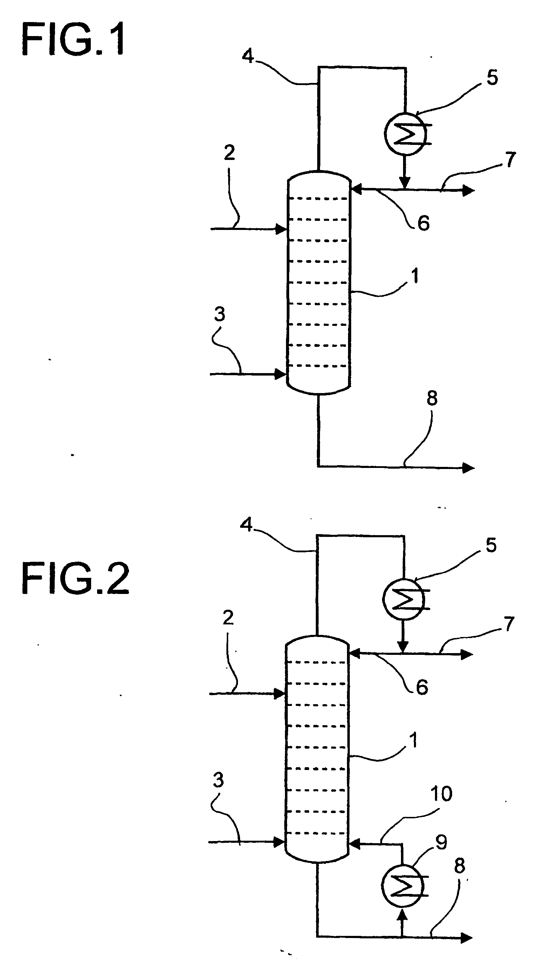

In Figur 1 ist der Versuchsaufbau für eine erste Ausführungsform des erfindungsgemäßen Verfahrens dargestellt. Es werden Lösungen aufgearbeitet, wie sie als Abwasser bei der Reinigung elektronischer Bauteile anfallen. In einer Glasglockenbodenkolonne mit 50 mm Durchmesser und 40 Glockenböden werden über die Abwasserzuleitung 2 kontinuierlich 2 kg/h einer Abwasserlösung auf den 35. Boden eingeleitet. Die Zusammensetzung des Abwassers beträgt 27 Gew.-% Wasser, 17 Gew.-% Hydroxylamin und 56 Gew.-% Amine. Über Dampfzuleitung 3 werden 4 kg/h Wasserdampf in den Sumpf der Kolonne eingeleitet. Ein Teil des Wasserdampfs wird als Stripdampf benötigt. Die bei der Kondensation des übrigen Teils des Wasserdampfs freiwerdende Wärme wird für die Zufuhr von Energie in die Kolonne genutzt. Über Ableitung 4 wird ein Kopfprodukt abgenommen, das im Kondensator 5 kondensiert wird. Ein Teil des kondensierten Kopfprodukts wird über Rückleitung 6 in die Kolonne zurückgeführt. Es wird ein sehr geringes Rücklaufverhältnis von 0,01 gewählt. Als Kopfprodukt wird eine wäßrige Lösung mit einem Gehalt von 8,6 Gew.-% Hydroxylamin erhalten, die durch Ausleitung 7 abgenommen werden kann. Im Sumpf der Rektifikationskolonne 1 sammelt sich eine wäßrige Lösung der Amine an, die über Sumpfableitung 8 abgeführt wird. Als Sumpfprodukt fallen die Amine mit einem Wassergehalt von 45,5 Gew.-% an.

### Beispiel 2:

Der in Figur 2 gezeigte Versuchsaufbau für eine zweite Ausführungsform des erfindungsgemäßen Verfahrens entspricht weitgehend dem in Figur 1 gezeigten Versuchsaufbau. Zusätzlich ist ein Wärmetauscher 9 vorgesehen, mit dem ein Teil des Sumpfprodukts erneut verdampft wird. Über Rückleitung 10 werden die dampfförmigen Anteile wieder in den Sumpf der Kolonne 1 zurückgeführt. Wie bei Beispiel 1 wird eine Glasglockenbodenkolonne mit 50 mm Durchmesser und 40 Glockenböden verwendet, in die auf den 35. Boden kontinuierlich 2 kg/h Abwasser über Zuleitung 2 eingeleitet werden. Die über Dampfzuleitung 3 in den Sumpf der Kolonne eingeleitete Stripdampfmenge ist gegenüber Beispiel 1 auf 3 kg/h verringert. Zusätzlich wird über Wärmetauscher 9 Energie eingetragen. Das über Kondensator 5 und Rückleitung 6 eingestellte Rücklaufverhältnis wird wie bei Beispiel 1 auf 0,01 eingestellt. Über Ableitung 7 wird als Kopfprodukt eine wäßrige Lösung mit einem Gehalt von 9 Gew.-% Hydroxylamin abgeleitet. Über Sumpfableitung 8 wird eine wäßrige Lösung der Amine erhalten, wobei die Wasserkonzentration im Sumpfabzug auf 8 Gew.-% verringert ist.

Die in den Beispielen erhaltenen Produktströme sind gut zu verarbeiten. Die als Kopfprodukt erhaltene, wäßrige Hydroxylaminlösung kann entweder relativ einfach zersetzt werden oder aber zum Beispiel durch Destillation zu verkaufsfähiger Ware aufgearbeitet werden. Das Sumpfprodukt, wäßriges Amin, kann kontinuierlich oder diskontinuierlich destillativ in Wasser und Amin mit einem Wassergehalt von ca. 2 Gew.-% aufgetrennt werden. Das bei der Aufarbeitung des Amins anfallende Abwasser kann in eine Kläranlage eingeleitet werden und dort weiter aufgearbeitet werden.

## Patentansprüche

1. Verfahren zur Aufarbeitung hydroxylaminhaltiger Lösungen, insbesondere aus der Elektronikindustrie enthaltend 10 bis 30% Wasser, 5 bis 20% Hydroxylamin und 50 bis 85% Amine, **dadurch gekennzeichnet, daß** die Lösung in eine Rektifikationskolonne eingeleitet wird und das Hydroxylamin im Gegenstrom mit Wasserdampf ausgetrieben wird, unter Erhalt eines Kopfprodukts aus wäßrigem Hydroxylamin und einer wässrigen Lösung der Amine als Sumpfprodukt.

2. Verfahren nach Anspruch 1, **dadurch gekennzeichnet, daß** das Kopfprodukt kondensiert und teilweise in die Rektifikationskolonne zurückgeführt wird, wobei ein Rücklaufverhältnis von kleiner 0,5 gewählt wird.

3. Verfahren nach Anspruch 1 oder 2, **dadurch gekennzeichnet, daß** die Rektifikationskolonne bei einem Druck von 0,1 bis 1,0 Atmosphären, vorzugsweise 0,8 bis 1,0 Atmosphären, betrieben wird.

4. Verfahren nach einem der Ansprüche 1 bis 3, **dadurch gekennzeichnet, daß** ein Teil des Sumpfprodukts mit einem Verdampfer erneut verdampft wird und die dampfförmigen Anteile in die Rektifikationskolonne zurückgeführt werden.

5. Verfahren nach einem der Ansprüche 1 bis 4, **dadurch gekennzeichnet**, das Wasser in flüssiger Phase der Rektifikationskolonne zugeführt wird, vorzugsweise in den Sumpf der Rektifikationskolonne eingeleitet wird.

## Claims

1. A process for working up hydroxylamine-containing solutions, in particular from the electronics industry, comprising 10 to 30% of water, 5 to 20% of hydroxylamine and 50 to 85% of amines, wherein the solution is passed into a rectification column and the hydroxylamine is stripped by the countercurrent method with steam, a top product comprising aqueous hydroxylamine and an aqueous solution of the amines as bottom product being obtained.

2. A process as claimed in claim 1, wherein the top product is condensed and is partly recycled to the rectification column, a reflux ratio of less than 0.5 being chosen.

3. A process as claimed in claim 1 or 2, wherein the rectification column is operated at from 0.1 to 1.0, preferably at from 0.8 to 1.0, atmosphere.

4. A process as claimed in any of claims 1 to 3, wherein some of the bottom product is vaporized again by means of an evaporator and the vaporous fractions are recycled to the rectification column.

5. A process as claimed in any of claims 1 to 4, wherein water is added to the liquid phase of the rectification column, preferably passed into the bottom of the rectification column.

## Revendications

1. Procédé pour l'élaboration finale de solutions à base d'hydroxylamine, en particulier provenant de l'industrie électronique, contenant 10 à 30% d'eau, 5 à 20% d'hydroxylamine et 50 à 80% d'amines, **caractérisé en ce que** la solution est introduite dans une colonne de rectification et que l'hydroxylamine est expulsée avec de la vapeur d'eau à contre-courant, avec obtention d'un produit de tête constitué d'hydroxylamine aqueuse et d'une solution aqueuse des amines comme produit de bas de colonne.

2. Procédé selon la revendication 1, **caractérisé en ce que** le produit de tête est condensé et partiellement recyclé dans la colonne de rectification, un rapport de recyclage inférieur à 0,5 étant sélectionné.

3. Procédé selon la revendication 1 ou 2, **caractérisé en ce que** la colonne de rectification est exploitée sous une pression de 0,1 à 1,0 atmosphère, préférentiellement de 0,8 à 1,0 atmosphère.

4. Procédé selon l'une des revendications 1 à 3, **caractérisé en ce qu'**une partie du produit de bas de colonne est réévaporée avec un évaporateur et que les parties sous forme de vapeur sont recyclées dans la colonne de rectification.

5. Procédé selon l'une des revendications 1 à 4, **caractérisé en ce que** de l'eau en phase liquide est amenée à la colonne de rectification, préférentiellement est introduite dans le bas de la colonne de rectification.
